(19) Europäisches Patentamt

European Patent Office

Office européen des brevets

(11) **EP 0 485 759 B1**

(12) **EUROPEAN PATENT SPECIFICATION**

(45) Date of publication and mention
of the grant of the patent:
**15.05.1996 Bulletin 1996/20**

(51) Int Cl.6: **G06F 12/08**, G06F 12/12

(21) Application number: **91117754.1**

(22) Date of filing: **17.10.1991**

(54) **Data loading device with cache memory**

Datenladevorrichtung mit Cache-Speicher

Dispositif de chargement de données à antémémoire

(84) Designated Contracting States:
**DE FR GB IT NL**

(30) Priority: **16.11.1990 JP 311985/90**

(43) Date of publication of application:
**20.05.1992 Bulletin 1992/21**

(73) Proprietor: **RICOS CO., LTD.**
**Miyakojima-ku, Osaka (JP)**

(72) Inventors:
• **Tsumura, Mihoji**
**Miyakojima Osaka (JP)**
• **Taniguchi, Shinnosuke**
**Higashinari-ku, Osaka (JP)**

(74) Representative: **Hering, Hartmut, Dipl.-Ing. et al**
**Patentanwälte**
**Berendt, Leyh & Hering**
**Innere Wiener Strasse 20**
**D-81667 München (DE)**

(56) References cited:
**EP-A- 0 309 994          EP-A- 0 354 579**
**US-A- 4 703 422**

• **ACM TRANSACTIONS ON DATABASE**
**SYSTEMS vol. 9, no. 4, December 1984, NEW**
**YORK US pages 503 - 525 , XP211856 ELHARDT**
**ET AL. 'A database cache for high performance**
**and fast restart in database systems'**
• **IBM TECHNICAL DISCLOSURE BULLETIN. vol.**
**29, no. 11, April 1987, NEW YORK US page 4816**
**, XP21723 'DASD update processing'**
• **IBM TECHNICAL DISCLOSURE BULLETIN. vol.**
**13, no. 11, April 1971, NEW YORK US pages 3259**
**- 3261 BLAIR ET AL. 'Management of large**
**numbers of assembled programs'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

BACKGROUND OF THE INVENTION

1. FIELD OF THE INVENTION

The invention relates to a data loading device which, on receipt of a read request from a terminal, reads data from a database and transmits said data to said terminal.

2. DESCRIPTION OF THE PRIOR ART

Conventional data-using systems include systems which comprise a database consisting of a magnetic memory device, a terminal and a data loading device which connects said database with said terminal such that, on receipt of a read request from said terminal, the required data is read from said database and transmitted to said terminal.

In this type of system, however, a certain amount of time is inevitably required to read the required data from the database and to transmit it to the terminal and this wait time can easily seem uncomfortably long to the terminal user.

Thus, while the use of a magnetic memory device has the advantage of enabling the provision of a large capacity database at low cost, it also suffers from the disadvantage that the time required to read data from the database, or in other words the loading time, can be quite long.

EP-A-0 354 579 discloses a system comprising a CPU, a disk device and a data loading device comprising a cache memory, wherein the data which have a high probability of being accessed by the CPU are previously coupled into the cache memory.

EP-A-0 309 994 discloses a system comprising a cache controller which upon receiving a memory access request from the CPU checks the cache memory to determine whether the contents of the specified request are in the cache memory and if yes passes the desired information from the system memory and sends it to the CPU as well as storing a copy of the information in the cache. The cache controller keeps a copy of the most frequently used data or instructions in the cache memory.

ACM TRANSACTIONS ON DATABASE SYSTEMS, vol. 9, no. 4, December 1984, NEW YORK US, pages 503-525, XP211856, ELHARDT ET AL. 'A database cache for high performance and fast restart in database systems' teaches the use of a cache for a database which results in high throughput of short transactions, the cache holding all those pages that are currently fixed for reading or have been changed by an active transaction.

US-A-4 703 422 discloses a system comprising a memory hierarchy control means, wherein the memory hierarchy comprises at least two levels of storage, i.e. a real storage and a peripheral storage. When a request for programs/data is received, a unit first determines using a management table if the programs/data are in the management table and if not they are written into real storage outside the memory hierarchy control and if yes it is determined if the programs/data are in real storage and if not they are loaded and the management table is updated. The system comprises an update control means to periodically update the cache memory contents according to the read frequency of data.

SUMMARY OF THE INVENTION

The present invention was devised with the above points in mind and the object of the invention is thus to reduce to a minimum the terminal wait time required for reading data from memory in response to a read request from the terminal through the use of a cache memory, which has a shorter loading time than a magnetic memory device, for the storage of frequently read data.

The invention concerns a data loading device as defined in claim 1.

In order to achieve the object described above, the device according to the invention has been designed such that when data which constitutes the subject of a terminal read request is held in the cache memory, the first control means of the device of the invention will duly read the specified data from said cache memory and transmit it to the terminal while at the same time updating the read frequency of that item of data. In this case, since the loading time of the cache memory is shorter than that of a magnetic memory device, the reading of the required data from the cache memory consequently permits a reduction in the length of the terminal wait time.

If, on the other hand, the required data is not held in the cache memory, then a second control means is used to read said data from the database instead and to transmit it to the terminal. Moreover, when the data is due to be updated, an update control means first clears the cache memory and then reads data from the database in order starting with the most frequently accessed data and writes it into the cache memory. Thus, since the most frequently accessed data is always stored in the cache memory, it is a common occurrence for required data to be read from the cache memory and this has the effect of reducing the overall wait time.

BRIEF DESCRIPTION OF THE DRAWINGS

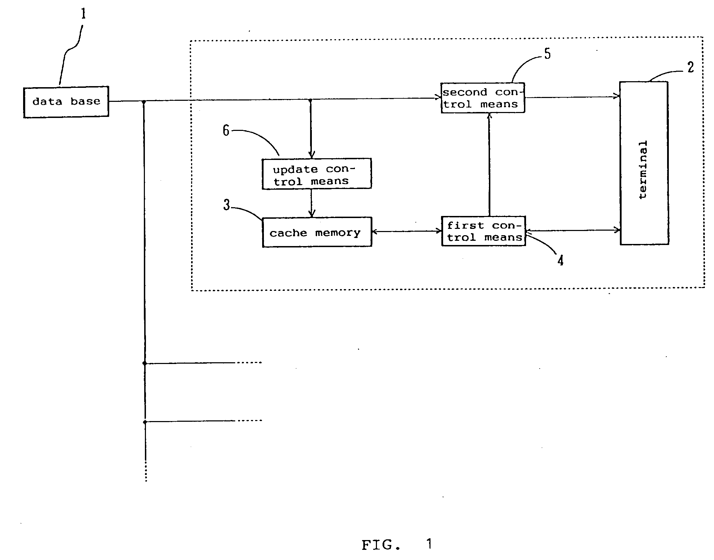

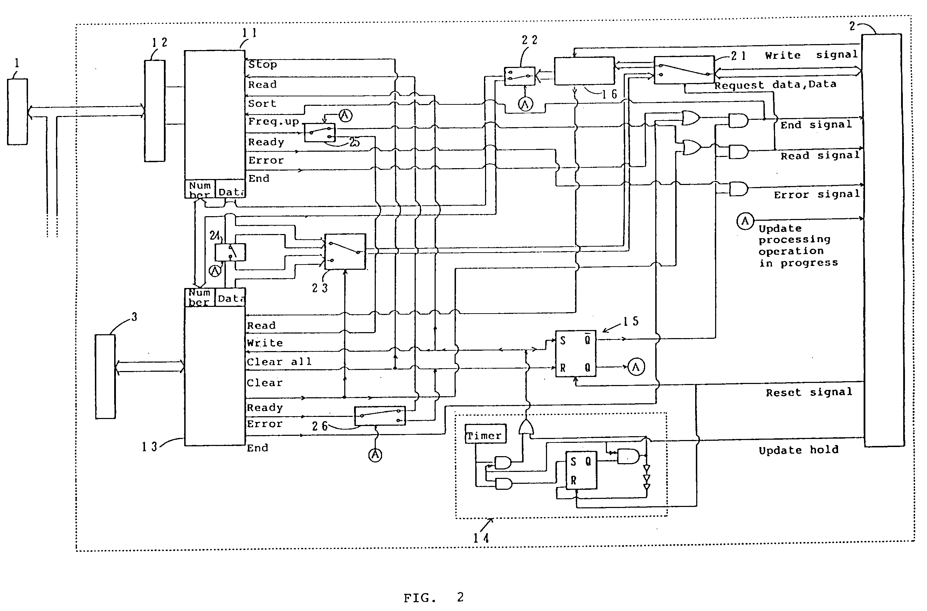

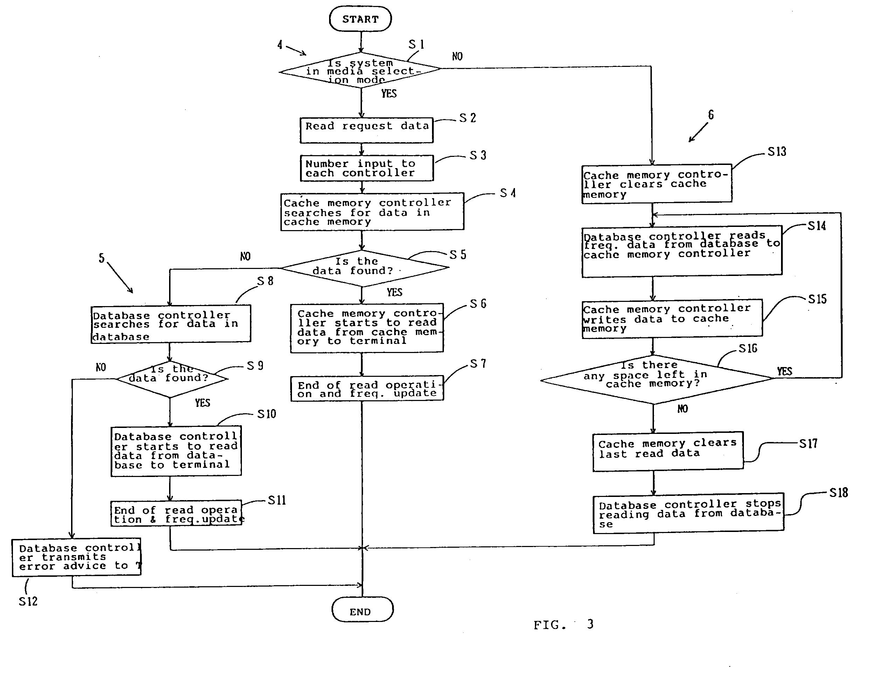

Figure 1 is a block diagram of a preferred embodiment wherein the embodiment is represented as divided in terms of function into a plurality of means; Figure 2 is a block diagram of the preferred embodiment wherein the embodiment is represented as divided into a plurality of microprocessors and related elements; and Figure 3 is a flow chart illustrating the operation of the preferred embodiment.

## DETAILED DESCRIPTION OF THE PREFERRED EMBODIMENT

Figure 1 illustrates a data retrieval system comprising the data loading device of the preferred embodiment. In the drawing 1 is a database constructed in a magnetic memory device, 2 is a terminal and 3 is a cache memory consisting of a semiconductor memory. 4 is the first control means which receives read requests from said terminal 2 and which, in cases where the required data is held in said cache memory 3, reads said data from said cache memory 3 and transmits it to the terminal 2 while at the same time updating the read frequency of said item of data. 5 is the second control means which receives output from the first control means 4 and which, in cases where the required data is not held in said cache memory 3, reads the required data from the database 1 instead and transmits it to the terminal 2. 6 is an update control means which first clears said cache memory 3 and then reads data from the database 1 in order starting with the most frequently accessed data and writes it into the cache memory 3. In the preferred embodiment there is a single database 1 to which more than one terminal 2, cache memory 3, first control means 4, second control means 5 and update control means 6 are connected as sets in parallel with respect to the database 1. A magneto-optic memory device could equally be used to hold the database 1.

Figure 1, as explained above, is a block diagram of the data loading device of the preferred embodiment wherein the embodiment is represented as divided in terms of function into a plurality of means. Figure 2, on the other hand, is a further block diagram of the same data loading device of the preferred embodiment, but wherein the embodiment is represented as divided into a plurality of microprocessors and related elements. This is just one example, however, and it would be possible to configure the invention in a variety of different ways. In Figure 2, 11 is a database controller which controls operations such as the reading of data from the database 1 and 12 is a command transmitter/receiver which is used to convert database 1 and database controller 11 commands. 13 is a cache memory controller which is connected to the cache memory 3 and which carries out a number of operations including reading of data from the cache memory 3.

There now follows a description of the signals which are input to and output from the terminal 2. Request data containing the number of the data which is to be read is output by said terminal 2 and the required data is then read either from the database 1 or from the cache memory 3, depending on the contents of the request, and input to the terminal 2. The writing of said request data either to the database controller 11 or to the cache memory controller 13 is indicated by a write signal output from the terminal 2. The timing of the reading of said data is specified by a read signal which is input to the terminal 2. An end signal is input to said terminal 2 in order to advise that the reading of the required data has been completed, while an error signal is input to the terminal 2 to indicate that the reading of the required data has failed. An update processing operation in progress signal is input to the terminal 2 to indicate that the data in the cache memory 3 is currently being updated. A hold update signal is output from the terminal 2 in order to indicate that the cache memory 3 has a data update operation on hold.

There now follows a description of the signals which are input to and output from the database controller 11. A stop signal input to said database controller 11 indicates that the reading of data from the database 1 is to be terminated. A read signal input to the database controller 11, on the other hand, indicates that the data which corresponds to the number indicated in the number port is to be read. The number of the required data, as indicated by the terminal 2, is read into said number port. The data which is subsequently read out is output to the data port. A sort signal, which is input to said database controller 11, indicates that the data is to be sorted and read in order with the most frequently accessed data being given precedence. When said sort signal is received, the number of the data which is currently being read is output to the number port. A frequency update signal, which is input to the database controller 11, indicates that the read frequency data of the number which is set in the number port is to be updated. The ready signal output by the database controller 11 indicates the timing of the external readout of the data which has been read from the database 1. The read to terminal 2 signal is output each time a byte of data is read out. The error signal output by the database controller 11 indicates that the data readout operation has failed. The end signal output by the database controller advises that the data readout operation has been successful and that all the data has been read.

There now follows a description of the signals which are input to and output from the cache memory controller 13. The read signal which is input to the cache memory controller 13 indicates that the data whose number is shown in the number port is to be read. The number is read into said number port from the terminal 2. The data which is read out is output to the data port. The write signal which is input to the cache memory controller 13 indicates that the data which has been set in the data port is to be written to the cache memory 3 as the number data set in the number port. A signal is input each time a byte is written. The clear all signal which is input to the cache memory controller 13 indicates that all the data in the cache memory 3 is to be cleared. The clear signal which is input to the cache memory controller 13 indicates that the data whose number is shown in the number port is to be cleared. The ready signal which is output by the cache memory controller 13 indicates the timing of the external readout of the data which has been read from the cache memory 3. The signal indicating readout to the terminal 2 is output for each byte that is read. The error signal output by the cache memory controller 13 advises that the data which has been requested cannot be found in the cache memory 3. The end signal output by the cache memory controller 13 advises that the data readout operation has been successful and that all the required data has been read.

Moreover, 14 in Figure 2 is a timer circuit which periodically generates a pulse to initiate the update of the cache memory 3. However, if a hold update signal is input from the terminal 2, then the generation of pulses by the timer circuit 14 will be put on standby until such time as the hold update signal is removed. A reset signal from the terminal 2 is input to a flip-flop of the timer circuit. 14 in order to reset the timer. 15 is a flip-flop. The pulses from said timer circuit 14 are input to said flip-flop 15 as set input while at the same time being input to the database controller 11 as a sort signal and to the cache memory controller 13 as a clear all signal. The reset signal from the terminal 2 is input to the flip-flop 15 as reset input. The output Q from flip-flop 15 takes the form of an update processing in progress signal to the terminal 2.

The terminal 2 data input/output line is connected to a switch contact of a first switch 21 which switches on receipt of a read signal to the terminal 2. The contact of said switch 21 which is normally closed is connected to the number ports of the database controller 11 and to the cache memory controller 13 by way of a number extractor 16 and a second switch 22 which is normally closed but which switches on receipt of the output Q from the flip-flop 15. On receipt of a write signal from the terminal 2, the number extractor 16 reads in the request data from the terminal 2 from which it takes the number which it then sets in the number ports of the database controller 11 and the cache memory controller 13. The number extractor 16 outputs a read signal to the cache memory controller 13.

The contact of said first switch 21 which is normally open is connected to the switch contact of a third switch 23 which switches on receipt of a ready signal from the cache memory controller 13. The contact (a) of said third switch 23 which is normally closed is connected to the data port of the database controller 11 and the contact (b) which is normally open is connected to the data port of the cache memory controller 13. The data ports of the database controller 11 and the cache memory controller 13 are connected by way of a fourth switch 24 which is normally open but which switches on receipt of the output Q of the flip-flop 15.

The ready signal from the database controller 11 is input to the switch contact of a fifth switch 25 which switches on receipt of the output Q of the flip-flop 15. The terminal 2 read signal is formed by taking the logical sum of the signal from the normally closed contact of the fifth switch 25 and the ready signal from the cache memory controller 13 and then by taking the logical product of this output and the output $\overline{Q}$ of the flip-flop 15. The signal from the normally open contact of the fifth switch 25 forms the write signal to the cache memory controller 13.

The error signal of said cache memory controller 13 is input to the switch contact of a sixth switch 26 which switches on receipt of the output Q of the flip-flop 15. The signal from the normally closed contact of the sixth switch 26 constitutes the read signal to the database controller 11. The signal from the normally open contact of the sixth switch 26, on the other hand, constitutes a stop signal to the database controller 11, a clear signal to the cache memory controller 13 and a reset signal to the flip-flop 15. The error signal to the terminal 2 is formed by taking the logical product of said database controller 11 error signal and the output $\overline{Q}$ of the flip-flop 15.

The end signal to the terminal 2 and the frequency update signal to the database controller 11 are formed by taking the logical sum of the end signals of said database controller 11 and cache memory controller 13 and then by taking the logical product of the resultant output and the output $\overline{Q}$ from the flip-flop 15.

There now follows a description of the operation of this data retrieval system by reference to the flow chart in Figure 3. The system has two operating modes, namely the media selection mode, in which data can be read, and the cache memory update mode, in which the cache memory 3 is updated. At step S1 it is determined whether the system is in the media selection mode or not. In the event that the system is in the media selection mode, the procedure moves on to step S2 at which the request data is read in. More precisely, if there is a read request in terminal 2 for a given data number, then the request data will be read into the number extractor 16 in accordance with the timing of the write signal which is applied at the same time. At step S3 the number extractor 16 extracts the number from the request data and outputs it by way of the second switch 22 to the number ports of both the database controller 11 and the cache memory controller 13. After outputting the number, the number extractor 16 then outputs a read signal to the cache memory controller 13 and the procedure moves on to step S4 at which the cache memory controller 13 searches the cache memory 3 for the requested data and then to step S5 at which it is determined whether or not the requested data can be found in the cache memory 3.

If the requested data is found in the cache memory 3 then the procedure moves on to step S6 at which the cache memory controller 13 reads said data from the cache memory 3 one byte at a time. The requested data is then output to the cache memory controller 13 data port and to the terminal 2 by way of the third switch 23 and the first switch 21, both of which have been switched by a ready signal. The ready signal is at the same time output as a read signal to the terminal 2 whereupon the next byte of data is duly read and the above procedure repeated.

When all the data has been read, the procedure moves on to step S7 at which the reading operation is ended and the read frequency updated. In other words, when the read operation is ended, the cache memory controller 13 outputs an end signal on receipt of which the terminal 2 also brings media selection mode processing to an end. Said end signal also constitutes the frequency update signal whereby the output frequency of the database controller 11 is updated.

On the other hand, if it is determined at step S5 that the required data cannot be found in the cache memory 3, then the procedure moves on to step S8 at which the database controller 11 carries out a search for the required data in the database 1. In other words, the cache memory controller 13 outputs an error signal which is transmitted by way of the sixth switch 26 to the database controller 11 as a read signal. On receipt of said read signal the database controller 11 conducts a search of the database 1 for the required data. At step S9 it is then determined whether the required data can be found in the database 1 or not.

If the required data is found in the database 1 then the procedure moves on to step S10 at which the database controller 11 reads the required data from the database 1 a byte at a time. Said data is then output to the database controller 11 data port from which it is then output to the terminal 2 by way of the third switch 23 and the first switch 21 both of which have been switched in response to the ready signal. The ready signal is also transmitted to the terminal 2 as a read signal whereupon the next byte of data is duly read and the above procedure repeated.

When all the data has been read, the procedure moves on to step S11 at which the reading operation is ended and the read frequency updated. In other words, when the read operation is ended, the database controller 11 outputs an end signal on receipt of which the terminal 2 also brings media selection mode processing to an end. Said end signal also constitutes the frequency update signal by means of which the output frequency of the database controller 11 is updated.

If the required data cannot, in fact, be found in the database 1, resulting in a NO determination at step S9, then the procedure moves on to step S12 at which an error signal is output by the database controller 11 to the terminal 2 which, on receipt of said error advice, brings media selection mode processing to an end.

If, on the other hand, the system is not in media selection mode but in cache memory update mode when the NO determination is made at step S1, then the procedure moves on to step S13 at which the cache memory controller 13 clears all the data in the cache memory 3. To be more precise, if the timer circuit 14 generates a pulse at a time when the hold update signal is not being generated, then the flip-flop 15 is set and an update processing operation in progress signal is output to the terminal 2. At the same time the second, fourth, fifth and sixth switches 22, 24, 25, 26 are all switched over from their regular positions. Said pulse is then input to the cache memory controller 13 as the clear all signal and all data is correspondingly cleared from the cache memory 3. At the same time said pulse is also input to the database controller 11 as a sort signal.

At step S14 the database controller 11 starts to read data from the database 1 to the cache memory controller 13 in order starting with the most frequently used data. While the reading operation is in progress, the number of the data currently being read is output to the database controller 11 number port from where it is relayed to the cache memory controller 13 number port. Moreover, data which has been read is output to the database controller 11 data port from where it is relayed by way of the fourth switch 24 to the cache memory controller 13 data port.

Next, at step S15, the cache memory controller 13 writes the data into the cache memory 3. More precisely, each time the database controller 11 reads a byte of data then it also outputs a ready signal which is input by way of the fifth switch 25 to the cache memory controller 13 as a write signal. The cache memory controller 13 then writes the data into the cache memory 3 in accordance with the timing of said write signal.

Next, at step S16, the amount of space remaining in the cache memory 3 is checked and, if sufficient space remains, then the procedure returns to step S14 and the data read and write operations are continued. If, on the other hand, there is not enough space left in the cache memory 3, then the cache memory controller 13 outputs an error signal.

Next, at step S17, said error signal is input by way of the sixth switch 26 to the cache memory controller 13 as a clear signal on receipt of which the cache memory controller 13 clears the last data which has been read. This prevents the input of incomplete data.

Next, at step S18, said error signal is also input to the database controller 11 as a stop signal on receipt of which the database controller 11 terminates the reading of data from the database 1. At the same time said error signal is also input to the flip-flop 15 as reset input with the result that the update processing operation in progress signal is canceled and the second, fourth, fifth and sixth switches 22, 24, 25, 26 are switched back to their regular positions. The cache memory update mode processing operation is now brought to an end.

At steps S1 to S7 in the flow chart outlined above, the first control means 4 receives a read request from the terminal 2 and, in cases where the required data is held in the cache memory 3, it reads said data from said cache memory 3 and transmits it to the terminal 2 while at the same time updating the read frequency of said data.

At steps S8 to S12, the second control means 5 receives output from the first control means 4 and, in cases where the required data cannot be found in the cache memory 3, said second control means 5 reads said data from the database 1 and transmits it to the terminal 2.

At steps S13 to S18, the update control means 6 clears the cache memory 3 as part of the data update operation and then reads data from the database 1 in order starting with the data with the highest read frequency and writes it into said cache memory 3.

In the preferred embodiment, therefore, since the time required for loading from the semiconductor memory is shorter than that required for loading from the magnetic memory device, reading data from the cache memory 3 reduces the terminal 2 wait time.

Moreover, since regular updating of the data means that the cache memory 3 always contains the data with the highest read frequency, reading of data from the cache memory 3 takes place more frequently thereby further reducing terminal 2 wait time.

Furthermore, since the data with the highest read frequency is stored in the cache memory 3 of each terminal 2, simultaneous read requests for the same data from more than one terminal 2 do not result in contention at the database 1 and this has the effect of yet further reducing terminal 2 wait time.

Finally, although it is envisaged that the system represented in the preferred embodiment could well handle music data configured in conformity with the MIDI standard, this does not mean that the system can only handle this sort of data.

## Claims

1. A data loading device having a terminal (2) and comprising:

   (a) a cache memory (3);
   (b) a first control means (4) which receives data read requests from said terminal (2) which, in case where the requested data is held in said cache memory (3), reads data from said cache memory (3) and transmits it to said terminal (2) while at the same time updating a read frequency of said data, and in cases where the requested data is not held in said cache memory sends an error output signal;
   (c) a second control means (5) which receives said data requests from said terminal and which when it receives the error output signal from said first control means (4) when the requested data is not held in said cache memory (3) reads said data from a database (1) and transmits it to said terminal (2) and updates the read frequency of said data; and
   (d) an update control means (6) which periodically clears said cache memory (3) data and which then reads data from said database (1) in an order starting with the most frequently read data determined using said read frequency and writes said most frequently read data to said cache memory (3).

2. A data loading device according to claim 1 wherein said cache memory (3) is a semiconductor memory.

3. A data loading device according to claim 1 or claim 2 wherein a plurality of said terminals (2) are provided each of which is connected to one of said cache memory (3), one of said first control means (4), one of said second control means (5) and one of said update control means (6).

4. A data loading device according to anyone of the preceding claims further comprising a timer circuit (14) which generates regular pulses in response to each of which said update control means (6) periodically initiates clearing of and writing to said cache memory.

5. A data loading device according to anyone of the preceding claims wherein said data comprises music data configured in accordance with the MIDI standard.

6. A data loading device according to claim 5 wherein each item of said data is assigned a number and wherein the data read requests from at least one of said plurality of terminals (2) are made in the form of request data wherein the number of the required data is specified.

## Patentansprüche

1. Datenladevorrichtung mit einem Endgerät (2), die auch folgendes aufweist:

   (a) einen Cachespeicher (3);
   (b) eine erste Steuereinrichtung (4), die Datenleseanfragen vom Endgerät (2) empfängt, die in dem Fall, in dem die angefragten Daten im Cachespeicher (3) gehalten sind, Daten vom Cachespeicher (3) liest und sie zum Endgerät (2) sendet, während gleichzeitig eine Lesefrequenz der Daten erneuert wird, und in den Fällen, in denen die angefragten Daten nicht im Cachespeicher gehalten sind, ein Fehlerausgangssignal sendet;
   (c) eine zweite Steuereinrichtung (5), die die Datenanfragen vom Endgerät empfängt, und die dann, wenn sie das Fehlerausgangssignal von der ersten Steuereinrichtung (4) empfängt, wenn die angefragten Daten nicht im Cachespeicher (3) gehalten sind, die Daten von einer Datenbasis (1) liest und sie zum Endgerät (2) sendet und die Lesefrequenz der Daten erneuert; und
   (d) eine Erneuerungs-Steuereinrichtung (6), die die Daten des Cachespeichers (3) periodisch löscht, und die dann Daten von der Datenbasis (1) in einer Reihenfolge liest, die mit den am häufigsten gelesenen Daten beginnt, die durch Verwenden der Lesefrequenz festgelegt sind, und die am häufigsten gelesenen Daten zum Cachespeicher (3) schreibt.

2. Datenladevorrichtung nach Anspruch 1, wobei der Cachespeicher (3) ein Halbleiterspeicher ist.

3. Datenladevorrichtung nach Anspruch 1 oder 2, wobei eine Vielzahl von Endgeräten (2) vorgesehen ist, von denen jedes mit einem der Cachespeicher (3), einer der ersten Steuereinrichtungen (4), einer der zweiten Steuereinrichtungen (5) und einer der Erneuerungs-Steuereinrichtungen verbunden ist.

4. Datenladevorrichtung nach einem der vorangehenden Ansprüche, die weiterhin eine Zeitgeberschaltung (14) aufweist, die regelmäßige Impulse erzeugt, wobei die Erneuerungs-Steuereinrichtung (6) in Antwort auf jeden davon ein Löschen des Cachespeichers und ein Schreiben zu ihm periodisch initiiert.

5. Datenladevorrichtung nach einem der vorangehenden Ansprüche, wobei die Daten gemäß dem MIDI-Standard konfigurierte Musikdaten sind.

6. Datenladevorrichtung nach Anspruch 5, wobei jedem Datensatz eine Anzahl zugeordnet ist, und wobei die Datenleseanfragen von wenigstens einem der Vielzahl von Endgeräten (2) in der Form von Anfragedaten aufgebaut sind, in denen die Anzahl der erforderlichen Daten bestimmt ist.

## Revendications

1. Dispositif de chargement de données possèdant un terminal (2), et comprenant :

   (a) une mémoire cache (3) ;
   (b) un premier moyen de commande (4) recevant des demandes de lecture de données à partir dudit terminal (2) qui, dans le cas où les données demandées sont détenues dans ladite mémoire cache (3), lit des données à partir de ladite mémoire cache (3) et les transmet audit terminal (2) tout en mettant à jour, en même temps, une fréquence de lecture desdites données, et, dans les cas où les données demandées ne sont pas détenues dans ladite mémoire cache, émet un signal de sortie d'erreur ;
   (c) un second moyen de commande (5) recevant lesdites demandes de données à partir dudit terminal et qui, lorsqu'il reçoit le signal de sortie d'erreur provenant dudit premier moyen de commande (4) lorsque les données demandées ne sont pas détenues dans ladite mémoire cache (3), lit lesdites données à partir d'une base de données (1) et les transmet audit terminal (2), puis met à jour la fréquence de lecture desdites données ; et
(d) un moyen de commande de mise à jour (6) qui, périodiquement, efface les données de ladite mémoire cache (3) et qui lit ensuite les données à partir de ladite base de données (1) de manière à commencer par les données le plus fréquemment lues en utilisant ladite fréquence de lecture et écrit lesdites données le plus fréquemment lues dans ladite mémoire cache (3).

2. Dispositif de chargement de données selon la revendication 1, caractérisé en ce que ladite mémoire cache (3) est une mémoire à semi-conducteur.

3. Dispositif de chargement de données selon la revendication 1 ou 2, caractérisé en ce qu'une pluralité desdits terminaux (2) sont prévus, chacun d'entre eux étant connecté à l'une de ladite mémoire cache (3), l'un dudit premier moyen de commande (4), l'un dudit second moyen de commande (5) et l'un dudit moyen de commande de mise à jour (6).

4. Dispositif de chargement de données selon l'une quelconque des revendications précédentes, comprenant en outre un circuit de minuterie (14) générant des impulsions régulières en réponse à chacune desquelles ledit moyen de commande de mise à jour (6) initie périodiquement l'effacement de, et l'écriture dans, ladite mémoire cache.

5. Dispositif de chargement de données selon l'une quelconque des revendications précédentes, caractérisé en ce que lesdites données comprennent des données de musique configurées conformément au standard MIDI.

6. Dispositif de chargement de données selon la revendication 5, caractérisé en ce que chaque item desdites données se voit assigné un numéro et en ce que les demandes de lecture de données à partir au moins d'un de ladite pluralité de terminaux (2) s'effectuent sous la forme de données demandées dans lesquelles le numéro des données requises est spécifié.

FIG. 1

EP 0 485 759 B1

FIG. 2

9

EP 0 485 759 B1

START

4 →  S1
Is system in media selection mode   NO

YES

Read request data — S2

Number input to each controller — S3

Cache memory controller searches for data in cache memory — S4

5

S8
Database controller searches for data in database

NO

Is the data found? — S5

YES

S6
Cache memory controller starts to read data from cache memory to terminal

NO  Is the data found? — S9

YES

S10
Database controller starts to read data from database to terminal

End of read operation & freq. update — S11

Database controller transmits error advice to T

S12

End of read operation and freq. update — S7

6

Cache memory controller clears cache memory — S13

Database controller reads freq. data from database to cache memory controller — S14

Cache memory controller writes data to cache memory — S15

Is there any space left in cache memory? — S16   YES

NO

Cache memory clears last read data — S17

Database controller stops reading data from database — S18

END

FIG. 3

10